# EUROPEAN PATENT APPLICATION

(11) **EP 3 048 025 A1**
(43) Date of publication of application: **27.07.2016**
(21) Application number: 15151840.4
(22) Date of filing: 20.01.2015
(51) Int. Cl.: B60W 30/18, B60W 50/14, B60W 50/00, B60W 50/08

(54) **Driver information system for two-wheelers**

(71) Applicant: Harman Becker Automotive Systems GmbH, 76307 Karlsbad (DE)
(72) Inventor: Huenig, Daniel, 72074 Tuebingen (DE); Beck, Klaus, 71665 Vaihingen/Enz (DE)
(74) Representative: Westphal, Mussgnug & Partner Patentanwälte mbB

(57) **Abstract**

A driver assistance system for a two-wheeler is described herein. The driver assistance system is used when driving along a route. In accordance with one example of the invention, the system comprises a data source that provides map data of an electronic map, a position sensor that provides the position of the two-wheeler and at least a first sensor that provides data representing the current value of a first dynamic parameter characterizing the state of the two-wheeler. The system further comprises a processor unit that is coupled to the first sensor, the data source and the position sensor and that is configured to calculate a critical value of the first dynamic parameter for a particular curve on the route. A display device is coupled to the processor unit to display information to the driver based on the current value and the calculated critical value of the first dynamic parameter.

## Description

### TECHNICAL FIELD

The present invention relates to the field of driver information and assistance systems, in particular to a driver assistance system for two-wheelers such as motorcycles.

### BACKGROUND

Different types of driver information systems and so-called "advanced driver assistance systems" (ADAS) are known. Such systems are intended to support the driver in the driving process. As such, driver assistance or driver information systems can be used to control functions of the vehicle or to automatically provide information and warnings to the driver. Common driver assistance systems are, for example, navigation systems, adaptive cruise control (ACC), intelligent speed adaptation (ISA), lane departure warning systems, etc.

In cars, driver assistance systems can, for example, warn the driver when he is about to drive through a curve at excessive speed. In such a system, information about the current speed of the car and the radius or curvature of a curve lying directly ahead of the car is used to assess the risk of the maneuver. Based on this information (and the known properties of the car), the driver assistance system can calculate the expected lateral forces (centrifugal forces) and lateral acceleration when driving through the upcoming curve. Driving through the curve is assessed as unsafe when the expected lateral forces exceed the frictional forces between the road and the car's tires, wherein the frictional forces may be estimated based on the road conditions (icy, wet or dry) and the type of tires mounted on the car. Of course, a safety factor is considered in such an assessment. In case the current speed is assessed as unsafe by the driver assistance system for an upcoming curve, a warning may be automatically output to the driver. Alternatively or additionally, the car may be decelerated automatically until a safe speed is reached a sufficient time before the curve is reached. Accidents can thus be avoided, or the risk of accidents can at least be reduced.

The situation is, however, more complicated for two-wheelers such as motorcycles. The maximum safe speed depends not only on the expected lateral forces and frictional forces when driving through a particular curve. The fact that two-wheelers assume an inclined position while driving through curves additionally has to be considered. The maximum inclination is thereby determined by physical and psychological factors and is defined as an inclination angle that should not be exceeded while driving through a particular curve.

Particularly for inexperienced drivers of two-wheelers, an automatic maximum speed recommendation before driving through a curve may be important information to avoid inclination, which can be dangerous or unpleasant for the driver. This information may also be of interest for experienced drivers of two-wheelers when driving in the limit range is intended.

### SUMMARY

A driver assistance system for a two-wheeler is described herein. The driver assistance system is used when driving along a route. In accordance with one example of the invention, the system comprises a data source that provides map data of an electronic map, a position sensor that provides a position of the two-wheeler, and at least a first sensor that provides data representing the current value of a first dynamic parameter characterizing the state of the two-wheeler. The system further comprises a processor unit that is coupled to the first sensor, the data source and the position sensor and that is configured to calculate a critical value of the first dynamic parameter for a particular curve on the route. A display device is coupled to the processor unit to display information to the driver based on the current value and the calculated critical value of the first dynamic parameter.

Moreover, a method for operating a driver assistance system of a two-wheeler is described. In accordance with one example of the invention the method comprises providing map data of an electronic map as well as providing, by using a position sensor, a position of the two-wheeler. By using a first sensor, data representing a current value of a first dynamic parameter is provided, which characterizes the state of the two-wheeler. The method further comprises calculating a critical value of the first dynamic parameter for a particular curve and displaying information to the driver based on the current value and the calculated critical value of the first dynamic parameter.

### BRIEF DESCRIPTION OF THE DRAWINGS

The invention can be better understood with reference to the following description and drawings. The components in the figures are not necessarily to scale, emphasis instead being placed upon illustrating the principles of the invention. Moreover, in the figures, like reference numerals designate corresponding parts. In the drawings,
FIG. 1 illustrates one embodiment of a driver assistance system.
FIG. 2 illustrates one exemplary helmet including a heads-up display used by the driver assistance system.
FIG. 3 illustrates the driver's view through the heads-up display; and
FIG. 4 is a flow-chart illustrating an exemplary method for operating a driver assistance system of a two-wheeler.

### DETAILED DESCRIPTION

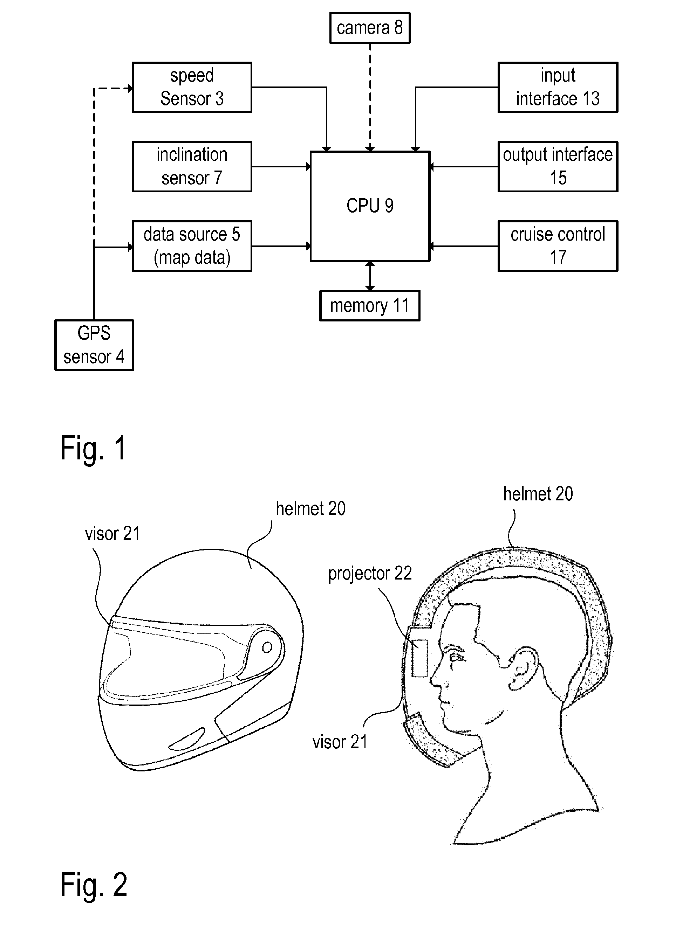

FIG. 1 illustrates a driver assistance system in accordance with one embodiment by means of a block diagram. Driver assistance system 1 includes processor 9, which may be any common signal processor, microcontroller, central processing unit (CPU) of an embedded computer, etc. Several peripheral units are coupled to processor 9. Speed sensor 3 provides information about the current speed of a motorcycle. For example, speed sensor 3 may be the motorcycle's speedometer. However, any other type of sensor may be used to obtain the speed information, such as GPS sensor 4, which provides velocity information in addition to data concerning the absolute position. Furthermore, data source 5, which provides map data, is coupled to processor 9. Data source 5 provides information about the current route and thus about any upcoming curves. Data source 5 may include a map database of a navigation system. Data source 5 may also be coupled to a wireless interface for mobile communication (e.g., in accordance with the UMTS standard) to obtain map data (and thus information about upcoming curves) via a wireless connection to a mobile communication network. For example, the map data may be retrieved via online services such as Google® Maps, etc. Furthermore, the data source may be coupled to GPS sensor 4, which provides current position data. The current position data may be used to obtain the desired information from the map data. In particular, the current position may be used to identify a particular curve on the current route.

The driver assistance system additionally includes inclination sensor 7, which is coupled to processor 9 and configured to provide measured data representing the current inclination angel of the motorcycle. As mentioned above, the information provided by (map) data source 5 can be used together with parameters representing properties (including static and dynamic parameters) of the motorcycle to calculate the critical speed of the motorcycle, which should not be exceeded in order to drive safely through the curve. A critical inclination angle may also be calculated based on this information. Furthermore, the information provided by speed sensor 3 and inclination sensor 7 can be used to assess whether or not the actual speed and inclination of the motorcycle are lower than the respective critical values. The current cruising speed and inclination are examples of dynamic parameters, which characterize the state of the two-wheeler and may be continuously measured or calculated based on measured data. Further examples of dynamic parameters are the displacement of the shock absorbers and the road condition (dry, wet, icy, gravelly, etc.). In contrast, static parameters characterize the two-wheeler itself. Static parameters are thus usually constant for a specific two-wheeler (and do not change significantly while driving); they include the weight (without the driver), the position of the center of gravity (without the driver), etc. The static parameters may be stored in memory 11, which is coupled to or included in processor 9. The mentioned dynamic parameters may also be stored in memory 11 and regularly updated (either in fixed time intervals or from time to time in response to specific events). Furthermore, the gap between the current speed and the critical value (i.e., the speed headroom) and the gap between the current inclination and the critical inclination (i.e., the inclination headroom) may be calculated. Therefore, the inclination while driving through an upcoming curve may be estimated (predicted) based on at least some of the mentioned dynamic parameters (particularly the current speed) and static parameters (particularly the weight and the position of the center of gravity). The mentioned inclination headroom is the difference between the critical inclination and the estimated inclination for a specific curve. These calculations and the mentioned assessment may be implemented by software executed in processor 9. However, portions of the described functionality may also be implemented using dedicated hardware or electronic components.

Further sensor data (dynamic parameters) can be used to calculate the critical speed and inclination values. For example, an accelerometer may be used to measure lateral acceleration in a curve. Road condition sensor 6 (which may include, e.g., a rain sensor, temperature sensor, etc.) may be used to obtain information about the road conditions (icy, wet, dry, etc.). Particularly on wet roads, the frictional forces between the tires and the road will be lower than on dry roads. As it is relevant for the grip between the tires and the road, the road condition is also regarded as a dynamic parameter that characterizes the state of the two-wheeler. Camera 8 and an image processor may be used to obtain further information about the road that lies ahead of the motorcycle. Processor 9 may also be configured to store (e.g., in memory 11) measured data (e.g., lateral acceleration, speed and inclination) for particular curves (or curves with a particular radius) and use such "historical data" to estimate the mentioned critical speed and inclination values for an upcoming curve. Moreover, the processor may calculate statistical data (e.g., average and variance) from sensor data actually measured while driving through a curve and use that statistical information (e.g., average lateral acceleration for a specific radius and speed) to calculate the critical values mentioned above. Processor 9 may furthermore evaluate the current speed and/or inclination (estimated for an upcoming curve) of the motorcycle with respect to the calculated critical values and assign a risk level (e.g., on a scale from 0 to 10, or "low", "medium", "high", etc.) to the current speed, for example, depending on how close the current speed is to the calculated critical value and/or depending on how close the expected inclination (in the upcoming curve) is to the calculated critical value.

Historical data (of measured and/or calculated dynamic parameters) may be stored for a specific curve. The historical data may be statistically evaluated; for example, an average inclination may be calculated for a specific cruising speed and curve radius. The historical data (and/or statistical information such as average values derived therefrom) may be used to (re-)calibrate static parameters, which are usually constant (before and after calibration). To provide an example, it is assumed that, given a set of static parameters, processor 9 overestimates the expected inclination for a specific speed and a specific curve radius. The estimated inclination, which is calculated for a specific speed and curve radius, and the corresponding inclination, which is actually measured while driving through the curve, can then be used to adapt (calibrate) the static parameters in such a manner that the estimated inclination and the actual inclination match better for the next curve. That is, the deviation between estimated and actual values is reduced (ideally to zero). Various methods for the mentioned adaption or calibration of (at least some) static parameters are known and thus are not further described here in more detail. Kalman filters may be used for that purpose, for example.

Furthermore, input interface 13 may be coupled to processor 9. The input interface may be, for example, a touchscreen, a keyboard or any other suitable device that allows a user to input data to processor 9. Input interface 13 may generally be used to control the operation of the driver assistance system. For example, the user may input data to influence the mentioned critical values for speed and inclination. For this purpose, the user may, e.g., set a safety factor (margin of safety) to be considered in the calculation of the critical values. For example, if the user chooses a margin of safety of 30 percent, the critical values actually used by the system are reduced by 30 percent as compared with the theoretical values obtained by the initial calculation. Furthermore, input interface 13 may be used to control map data source 5 (e.g., to set a desired route) or to control other functions of the driver assistance system.

Processor 9 can be coupled with output interface 15, which may be a display such as a heads-up display, which may be included in a motorcycle helmet or glasses. Glasses with heads-up displays are well known and have been marketed, for example, as Google Glass^{®} and Epson Moverio^{®} multimedia glasses. Such heads-up displays allow the results of the calculations and evaluations performed by processor 9 to be presented to the driver of the motorcycle. For example, the risk level that the processor has assigned to the current speed may be indicated to the driver via the heads-up display by showing a colored symbol. For example, a green symbol could indicate a low risk level, a yellow symbol could indicate a medium risk level and a red symbol could indicate a high risk level, suggesting that the driver should decelerate (speed alert). However, a separate symbol may be presented to the driver that indicates that the current speed is too high to safely drive through the upcoming curve and that deceleration is required. Color-coding may also be used in connection with the speed alert, wherein, for example, a yellow symbol may indicate a recommendation to slightly decelerate and a red symbol may indicate a recommendation to brake and significantly reduce speed. Of course, color-coding is only one option. Additionally or alternatively, the shapes of the symbols or pictograms may be changed to indicate different risk levels or speed alerts. Processor 9 may also be configured to instruct automatic cruise control 17 (ACC) to slow down.

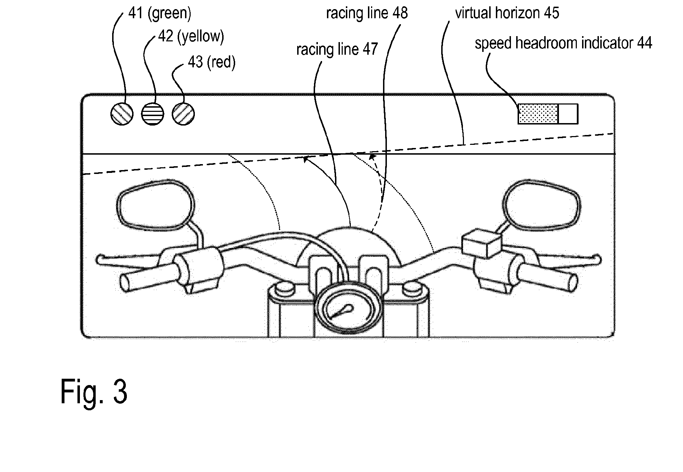

As mentioned, heads-up display 15 may be included in motorcycle helmet 20. As illustrated in FIG. 2, helmet 20 includes visor 21 and heads-up projector 22, which is configured to project the display onto the visor. The setup is basically the same for heads-up displays included in glasses. FIG. 3 illustrates the driver's view through visor 21 of helmet 20. The driver can see through the visor the front portion of the motorcycle, as well as the surrounding landscape, the road ahead and horizon 40. Other visible objects may be generated by the heads-up display in the driver's field of view (projector 22 projecting the display onto visor 21). For example, differently colored virtual indicator lamps 41, 42 and 43 (icons) may be generated in the driver's field of view by the heads-up display. In the present example, a green icon 41 indicates a low risk level for the current speed and a particular upcoming curve, a yellow icon 42 illustrates a medium risk level and a red icon 43 indicates a high risk level, signaling to the driver that deceleration is recommended before driving into the curve ahead. Furthermore, FIG. 3 shows, as an illustrative example, virtual bar graph indicator 44, which is generated in the driver's field of view by projector 22. The bar graph indicator may provide the driver with an indication of speed headroom with respect to the critical speed calculated by processor 9 for a particular upcoming curve.

Also illustrated in FIG. 3 is virtual horizon line 45, which is inclined with respect to the actual horizon. The inclination angle of virtual horizon line 45 corresponds to the expected (calculated by processor 9) inclination of the motorcycle when driving through the respective upcoming curve. During an optimum ride through the curve, the virtual horizon line and the actual horizon line are congruent or parallel. If using a camera (see camera 8 in FIG. 1) and image processing, further graphical symbols may be generated in the driver's field of view for enhanced guidance. For example, the ideal racing line 47 for a specific curve can be calculated by processor 9 and displayed by the heads-up display as if it were projected on the road. For this purpose, the camera regularly has to capture images from the road ahead and detect the lanes (e.g., the median strip and the side strip or the roadside). The camera may be mounted on helmet 20 or on the motorcycle. If the calculated (estimated) racing line remains on the road (or on the right lane of the road), the line may be displayed, e.g., in green. Otherwise, in case the calculated racing line left the road due to overcritical cruising speed (for the current road conditions), the racing line would be displayed in a different color (or flashing intermittently). That is, color-coding can be used to alert the driver. In the present illustration the unsafe racing line 48 is shown as dashed line, the roadsides are marked with dotted lines.

The driver assistance system described herein may be integrated in a motorcycle, wherein processor 9 may be the CPU of an on-board computer. Data source 5 (see FIG. 1) may be part of an on-board navigation system. Speed sensor 3 may be the same sensor that generates the signal for the motorcycle's speedometer. The present driver assistance system may alternatively be implemented in a mobile device such as a mobile phone or tablet PC using dedicated software that may be provided as an app executed by the mobile device. In this case, processor 9 would be the CPU of the mobile device. The mobile device may also have an integrated mobile navigation system that provides the map data (see FIG. 1, data source 5) and the position of the motorcycle on the map via an integrated GPS sensor 4. The map data may be stored on the mobile device or retrieved via a wireless connection that operates, e.g., in accordance with the UMTS or LTE standard. Even inclination sensor 7 may be integrated in the mobile device if the mobile device is equipped with a gyroscope integrated in a semiconductor chip. The current speed may also be determined using the on-board GPS sensor. Input interface 13 may be realized by using the mobile device's touchscreen. Furthermore, the mobile device may communicate with output interface 15 (the heads-up display) via a radio link such as Bluetooth (IEEE 802.15.1) or wireless LAN (IEEE 802.11). Similarly, the mobile device may be coupled to the vehicle's on-board computer via a cable or another wireless link, and components of the driver assistance system may be distributed between the mobile device and motorcycle. Camera 8 may furthermore be coupled to the mobile device or on-board computer by using a wireless link, e.g., in accordance with a standard of the IEEE 802.11 family.

FIG. 4 is a flow-chart illustrating one exemplary method of operating a driver assistance system such as the system depicted in Fig. 1. Accordingly, the method includes providing map data of an electronic map (step 51), e.g. by using map data source 5 as illustrated in the embodiment of Fig. 1. The method further includes providing a position of the two-wheeler (step 52), e.g. by using GPS sensor 4 also shown in the embodiment of Fig. 1. Furthermore (step 53), the method includes providing data representing a current value of a first dynamic parameter, which characterizes the state of the two-wheeler. The first dynamic parameter may be, for example, the speed or the inclination of the two-wheeler, which may be measured by speed sensor 3 or, respectively, inclination sensor 7 (see Fig. 1). Moreover, the method further includes calculating a critical value of the first dynamic parameter (e.g. a critical speed or inclination value) for a particular curve (step 54) and displaying based on the current value and the calculated critical value of the first dynamic parameter (step 55). As mentioned above, the particular curve may be identified based on the map data and the measured position.

The method may be at least partly performed and/or controlled by using a processor that executed software instructions, such as CPU 9 shown in the example of Fig. 1. In one embodiment the method additionally includes providing, e.g. by using a second sensor, data representing a current value of a second dynamic parameter characterizing the state of the two-wheeler. In this case, an estimated value of the second dynamic parameter is calculated for a particular curve, and the information displayed to the driver is based on the estimated value and a critical value of the second dynamic parameter. In this example, the first dynamic parameter may be the speed of the two wheeler and the second dynamic parameter may be the inclination of the two wheeler. Accordingly, the first sensor is a speed sensor such as speed sensor 3, and the second sensor is an inclination sensor such as inclination sensor 7 as shown in the embodiment of Fig. 1. The estimated value of the second dynamic value (e.g. the estimated inclination value) is calculated based on the first dynamic parameter (e.g. the current speed) and at least one static parameter (e.g. the weight of the two-wheeler including the driver). Various examples of static parameters have already been discussed in connection with Fig. 1.

In accordance with one exemplary embodiment the static parameter(s) may be calibrated based on the current value and the estimated value of the second dynamic parameter for a specific curve (e.g. the weight of the two-wheeler including the driver). That is, for example, the static parameter(s) used for calculating an estimated inclination (predicted inclination value) for a particular curve may be adapted in such a manner that the predicted value(s) match the values actually measured for the particular curve. Additionally, the estimated value of the second dynamic parameter (e.g. the estimated/predicted inclination) may be calculated depending on values of the first and/or second parameters measured or calculated for a plurality of curves. That is, measured and calculated date for a particular curve may be used to calculate corresponding estimations for another curve (e.g. having a different radius).

Additionally or alternatively, the method may include calculating, for a specific curve and based on (at least) the current value of the first parameter (e.g. cruising speed of the two-wheeler), an ideal racing line for driving through the specific curve. In case the display, which is used for displaying information to the driver, is a head-up display the ideal racing line may be displayed so that it appears as if projected on the road. Furthermore, the ideal racing line may be color-coded to indicate whether, or not, driving along the ideal racing line is safe (see also Fig. 3). Additionally or alternatively, the display may be used to display a virtual horizon, which is tilted in accordance with the estimated (predicted) or currently measured value of the inclination of the two-wheeler.

As mentioned above, the method as illustrated in Fig. 4 may additionally include assigning a risk level to a current speed of the two-wheeler depending on the current and critical values of the first and/or second dynamic parameter. The risk level may be communicated to the driver optically (e.g. by using the display device) or acoustically.

While various embodiments of the invention have been described, it will be apparent to those of ordinary skill in the art that many more embodiments and implementations are possible within the scope of the invention. Accordingly, the invention is not to be restricted except in light of the attached claims and their equivalents. With regard to the various functions performed by the components or structures described above (assemblies, devices, circuits, systems, etc.), the terms (including a reference to a "means") used to describe such components are intended to correspond, unless otherwise indicated, to any component or structure that performs the specified function of the described component (i.e., that is functionally equivalent), even if not structurally equivalent to the disclosed structure that performs the function in the exemplary implementations of the invention illustrated herein. Furthermore, it should be mentioned that features explained with reference to a specific figure may be combined with features of other figures, even in those cases in which this has not explicitly been mentioned.

With the aforementioned range of variations and applications in mind, it should be understood that the present invention is not limited by the foregoing description, nor is it limited by the accompanying drawings. Instead, the present invention is limited only by the following claims and their legal equivalents.

## Claims

1. A driver assistance system for a two-wheeler; the system comprises the following:
a data source that provides map data of an electronic map;
a position sensor that provides a position of the two-wheeler;
at least one first sensor that provides data representing a current value of a first dynamic parameter characterizing the state of the two-wheeler;
a processor unit that is coupled to the first sensor, the data source and the position sensor and that is configured to calculate a critical value of the first dynamic parameter for a particular curve; and
a display device coupled to the processor unit, wherein the display device displays information to the driver based on the current value and the calculated critical value of the first dynamic parameter.

2. The driver assistance system of claim 1, further comprising:
a second sensor that provides data representing a current value of a second dynamic parameter characterizing the state of the two-wheeler;
wherein the processor is configured to calculate an estimated value of the second dynamic parameter for a particular curve; and
wherein the display device that displays information to the driver based on the estimated value and a critical value of the second dynamic parameter.

3. The driver assistance system of claim 2,
wherein the second sensor is an inclination sensor and the second dynamic parameter is an inclination of the two-wheeler.

4. The driver assistance system of claim 2 or 3,
wherein the processor is configured to calculate the estimated value of the second dynamic value based on the first dynamic parameter and at least one static parameter.

5. The driver assistance system of claim 4,
wherein the processor is configured to calibrate the at least one static parameter based on the current value and the estimated value of the second dynamic parameter for a specific curve.

6. The driver assistance system of claim 4,
wherein the processor is configured to calibrate the at least one static parameter based on the current value and the estimated value of the second dynamic parameter for a specific curve;
wherein the estimated value of the second dynamic parameter is calculated depending on values of the first and/or second parameters measured or calculated for a plurality of curves.

7. The driver assistance system of any of claims 1 to 6,
wherein the first sensor is a speed sensor and the first dynamic parameter is a cruising speed of the two-wheeler.

8. The driver assistance system of any of claims 1 to 7,
wherein the critical value of the first dynamic parameter is a parameter that should not be exceeded in order to safely pass through the curve.

9. The driver assistance system of any of claims 1 to 8,
wherein the display is a transparent heads-up display;
wherein the processor is configured to calculate, for a specific curve and based on at least the current value of the first parameter, an ideal racing line for driving through the specific curve; and
wherein the display is configured to display the ideal racing line so that it appears as if projected on the road.

10. The driver assistance system of claim 9,
wherein the ideal racing line is color-coded to indicate whether driving along the ideal racing line is safe.

11. The driver assistance system of any of claims 1 to 10,
wherein the display is configured to display a virtual horizon line that is tilted in accordance with an estimated or a current value of an inclination of the two-wheeler.

12. The driver assistance system of any of claims 1 to 11,
wherein the processor is configured to assign a risk level to a current speed of the two-wheeler depending on the current and critical values of the first and/or second dynamic parameter.

13. The driver assistance system of any of claims 1 to 12, wherein the processor, the data source and the position sensor are included in a mobile device.

14. The driver assistance system of claim 13, wherein the mobile device is coupled to an on-board computer of the two-wheeler via a cable or a wireless link.

15. A method for operating a driver assistance system of a two-wheeler; the method comprises the following:
providing map data of an electronic map;
providing, by using a position sensor, a position of the two-wheeler;
providing, by using a first sensor, data representing a current value of a first dynamic parameter characterizing the state of the two-wheeler;
calculating a critical value of the first dynamic parameter for a particular curve; and
displaying information to the driver based on the current value and the calculated critical value of the first dynamic parameter.
